# EUROPÄISCHE PATENTSCHRIFT

(11) **EP 2 585 737 B1**
(45) Veröffentlichungstag und Bekanntmachung des Hinweises auf die Patenterteilung: **16.04.2014**
(21) Anmeldenummer: 11743762.4
(22) Anmeldetag: 22.06.2011
(51) Int. Cl.: F16H 55/18

(54) **ZAHNRADANORDUNG**
GEAR ARRANGEMENT
ENGRENAGE

(30) Priorität: 23.06.2010 AT 10472010
(43) Veröffentlichungstag der Anmeldung: 01.05.2013
(73) Patentinhaber: Miba Sinter Austria GmbH, 4663 Laakirchen (AT)
(72) Erfinder: BUCHLEITNER, Helmut, A-4863 Seewalchen (AT)
(74) Vertreter: Burger, Hannes
(86) Internationale Anmeldenummer: PCT/AT2011/000279
(87) Internationale Veröffentlichungsnummer: WO 2011/160153

(56) Entgegenhaltungen:
- WO-A1-2005/090829
- WO-A1-2005/090830
- AT-A4- 507 071
- GB-A- 560 469
- GB-A- 2 409 014
- JP-A- 8 159 242
- JP-A- 58 008 864
- JP-A- 60 078 159
- JP-A- 2001 012 581

## Beschreibung

Die Erfindung betrifft eine Zahnradanordnung mit einem Hauptzahnrad und einem gegenüber diesem relativ in Umfangsrichtung verdrehbaren Zahnrad, wobei das verdrehbare Zahnrad zumindest einen in axialer Richtung vorstehenden Stützsteg, der zwei Flächen, die sich in der Umfangsrichtung erstrecken, und eine erste Seitenfläche und eine zweite Seitenfläche, die sich in radialer Richtung erstrecken, aufweist, und das Hauptzahnrad zumindest eine Ausnehmung aufweist, in der der Stützsteg zumindest teilweise aufgenommen ist, wobei die Ausnehmung eine Abmessung in Umfangsrichtung aufweist, die größer ist als die Abmessung des Stützsteges in gleicher Richtung, sowie mit zumindest einem in Umfangsrichtung des Hauptzahnrades wirksamen Federelement das an einer Seitenfläche des Stützsteges und zumindest teilweise innerhalb der Ausnehmung angeordnet ist.

Eine derartige Zahnradanordnung ist beispielsweise aus der von der Anmelderin stammenden WO 2005/090830 A1 bekannt, die ein Zahnrad für eine spielfreie Stirnradstufe mit einer Nabe, mit einem von der Nabe getragenem Zahnkranz, der entlang einer achsnormalen Teilungsebene in zwei Teilkränze, nämlich in einen nabenfesten Kranzteil und in einen diesen gegenüber koaxial drehbar gelagerten Kranzring, geteilt ist, und mit einer die Nabe umschließenden Ringfeder, die sich mit ihren einander in Umfangsrichtung gegenüberliegenden Enden an einstückig mit den beiden Teilkränzen ausgebildeten, einander in axialer Richtung überlappenden Stützstegen abstützt, die in Umfangsrichtung des Zahnkranzes hintereinander angeordnet sind. Der Stützsteg eines Teilkranzes durchsetzt den anderen Teilkranz in einer Durchtrittsöffnung mit Spiel in Umfangsrichtung und bildet der Stützsteg des Teilkranzes mit der Durchtrittsöffnung einen die Durchtrittsöffnung begrenzenden Montageanschlag für den anderen Stützsteg. Der Kranzring ist auf der Nabe beispielsweise mit Hilfe eines Sprengringes axial gesichert.

Aus der ebenfalls auf die Anmelderin zurückgehenden WO 2005/090829 A1 ist ein Zahnrad für eine spielfreie Stirnradstufe bekannt mit einer Nabe, mit einem von der Nabe getragenen Zahnkranz, der entlang einer achsnormalen Teilungsebene in zwei Teilkränze, nämlich in einen nabenfesten Kranzteil und in einen diesem gegenüber koaxial drehbar gelagerten Kranzring, geteilt ist, und mit einer in Umfangsrichtung des Zahnkranzes wirksamen Federanordnung aus über den Umfang rotationssymmetrisch verteilten Federelementen, die sich jeweils an den beiden Teilkränzen abstützen, wobei die aus elastomeren Federkörpern bestehenden Federelemente auf einem die Nabe umschließenden Ring vorgesehen sind und an Stützanschlägen des Kranzringes angreifen.

Die JP 08-159242 A beschreibt eine spielfreie Stirnradstufe aus einem ersten Zahnrad aus Metall und einem zweiten Zahnrad aus einem elastisch verforlnbaren Kunststoff.

Die GB 2 409 014 A beschreibt eine Zahnradanordnung mit einem Hauptzahnrad und einem gegenüber diesem relativ in Umfangsrichtung verdrehbaren Zahnrad. Das verdrehbare Zahnrad ist mit dem Hauptzahnrad über elastische Elemente gekoppelt. Die elastischen Elemente werden aus einem HNBR durch direkte Formung in entsprechenden Ausnehmungen des Hauptzahnrades hergestellt. Das verdrehbare Zahnrad weist Bolzen auf, die in die Ausnehmungen ragen und die von den elastischen Elementen umgeben sind.

Aus der JP 2001/012581 A ist eine Zahnradanordnung bekannt, bei der das verdrehbare Zahnrad mit dem Hauptzahnrad über eine Feder gekoppelt ist, um damit das Zahnradspiel zu reduzieren.

Es ist die Aufgabe der vorliegenden Erfindung, eine derartige Zahnradanordnung zu vereinfachen.

Diese Aufgabe wird mit der eingangs genannten Zahnradanordnung gelöst, bei der das Federelement zumindest teilweise aus zumindest einem Elastomer besteht, mit der ersten Seitenfläche des Stützsteges verbunden ist und einen integralen Bestandteil des verdrehbaren Zahnrades bildet, wobei die beiden Flächen und die zweite Seitenfläche des Stützsteges kein Federelement aufweisen.

Von Vorteil ist dabei, dass durch die Verbindung des Federelmentes mit dem Stützsteg kein zusätzlicher Bauraum für die Anordnung des Federelementes zwischen den beiden Zahnrädern geschaffen werden muss, sodass die Zahnradanordnung in axialer Richtung verkleinert werden kann. Zudem ist damit auch eine zusätzliche Abdeckung des Ausnehmung in axialer Richtung nicht erforderlich. Insgesamt kann also die Anzahl der Bauteile der Zahnradanordnung reduziert werden, wodurch die Herstellung dieser Zahnradanordnung vereinfacht wird.

Das Federelement besteht aus zumindest einem Elastomer. Es ist damit möglich, ein relativ kleines Federelement einzusetzen, wodurch die Baugröße der Zahnradanordnung ohne Einbuße der Funktionalität weiter verkleinert werden kann.

Als Elastomer wird bevorzugt ein thermoplastisches Elastomer eingesetzt, insbesondere ausgewählt aus einer Gruppe umfassend TPU, TPA und TPE, da die bekannten Vorteile der thermoplastischen Verarbeitbarkeit die Elastomere die Herstellung der Zahnradanordnung deutlich vereinfachen.

In der bevorzugten Ausführung der Zahnradanordnung wird das Federelement auf den Stützsteg aufvulkanisiert, sodass keinerlei weitere händische Manipulationen für die Verbindung des Federelementes mit dem Zahnrad erforderlich sind. Zudem sind damit eine bessere Formgenauigkeit des Federelementes durch Anpassung an die Oberfläche des Zahnrades und eine bessere Haftung des Federelementes an der Oberfläche des Zahnrades erreichbar.

Es ist aber auch möglich, auch wenn sich damit der Montageaufwand der Zahnradanordnung erhöht, dass das Federelement auf den Stützsteg aufgeklebt ist, um eine getrennte Fertigung des Federelementes zu erreichen. Insbesondere ist dies in Hinblick auf die Austauschbarkeit des Federelementes von Vorteil, bzw. wenn das Federelement einen komplexeren Aufbau aus mehreren Einzelschichten aufweist, wodurch eine bessere Anpassbarkeit an ein gewünschtes Federverhalten des Federelementes erreicht werden kann.

Das Federelement kann zumindest teilweise mit gerundeten Kanten und/oder Ecken ausgeführt sein, wodurch einerseits eine bessere Entformbarkeit des Federelementes erreicht werden kann, insbesondere wenn dieses auf das Zahnrad aufvulkanisiert wird, und andererseits aber auch die Funktion des Federelementes in der Zahnradanordnung verbessert werden kann, insbesondere die Standzeit des Federelementes durch geringeren Verschleiß aufgrund geringerer reibungsbedingter Abnutzungserscheinungen verbessert werden kann.

Zur Verlängerung der Standzeit und zur Verbesserung der Verschleißeigenschaften des Federelementes kann auch vorgesehen sein, dass auf der Oberfläche des Federelementes eine Gleitbeschichtung aufgebracht ist oder im Federelement ein Festschmierstoff enthalten ist.

Eine Verbesserung der Verschleißeigenschaften des Federelementes wird aber auch erreicht, wenn dieses faserverstärkt ist, wobei von Vorteil ist, dass durch die Faserverstärkung die elastischen Eigenschaften des Federelementes großteils erhalten werden können.

Zur Verbesserung bzw. Einstellung der Federelastizität des Federelementes kann gegebenenfalls vorgesehen werden, dass dieses einen in Umfangsrichtung konischen oder trapezförmigen oder zieharmonikaförmigen oder konvexen Querschnitt aufweist.

Zum besseren Verständnis der Erfindung wird diese anhand der nachfolgenden Figuren näher erläutert.

Es zeigen jeweils in schematisch vereinfachter Darstellung:
- Fig. 1: eine Zahnradgruppe gemäß dem Stand der Technik in Explosionsdarstellung;
- Fig. 2: eine erfindungsgemäße Zahnradgruppe in Schrägansicht;
- Fig. 3: einen Teil des verdrehbaren Zahnrades der Zahnradgruppe in Schrägansicht;
- Fig. 4: eine Ausführungsvariante eines Federelementes in Draufsicht;
- Fig. 5: eine weitere Ausführungsvariante eines Federelementes in Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige erfindungsgemäße Lösungen darstellen.

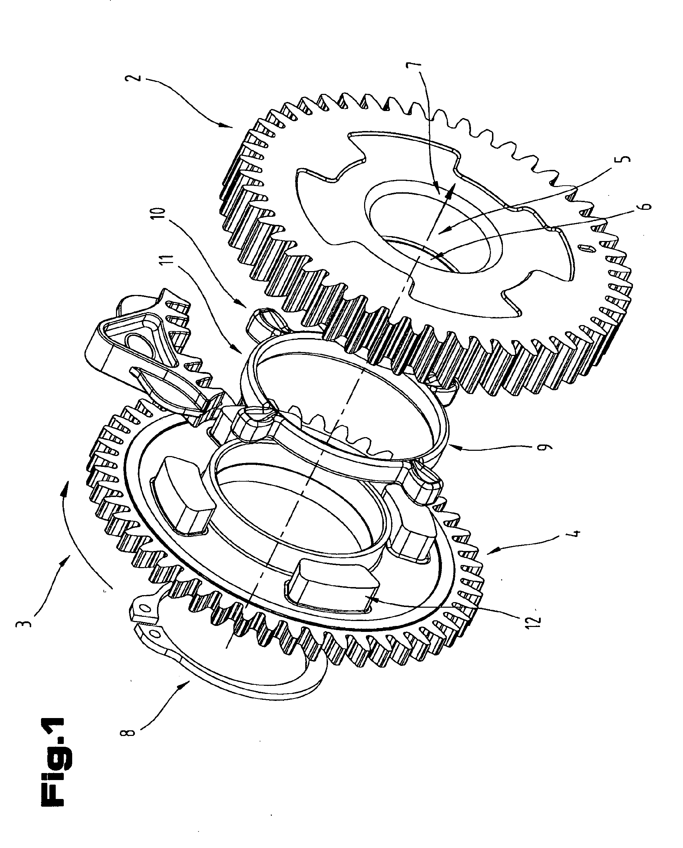

Fig. 1 zeigt in Explosionsdarstellung eine Zahnradanordnung 1, wie sie aus der WO 2005/090829 A1 bekannt ist. Diese Zahnradanordnung 1, auch "split-gear" genannt, weist ein Hauptzahnrad 2 und ein gegenüber diesem relativ in einer Umfangsrichtung 3 verdrehbares Zahnrad 4 auf, wobei das Hauptzahnrad 2 eine Nabe 5 aufweist, die insbesondere einstückig mit dem Hauptzahnrad 2 ausgebildet ist. Das verdrehbare Zahnrad 4 ist auf der Nabe 5 des Hauptzahnrades 2 verdrehbar angeordnet. Die Nabe 5 weist eine Ausnehmung 6 in Form einer Bohrung zur Aufnahme eines nicht dargestellten Schraubbolzens mit Schraubenkopf auf. Um die Position des verdrehbaren Zahnrades 4 in axialer Richtung 8 am Hauptzahnrad 2 zu sichern, ist ein Sicherungselement 8, das bei dieser Ausführungsvariante die Form einer Seegeringes ausgebildet ist, angeordnet. Das Sicherungselement 8 greift in eine einer umlaufenden Nut, die in einem Endbereich der Nabe 5 ausgebildet ist, ein.

Zwischen dem Hauptzahnrad 2 und dem verdrehbaren Zahnrad 4 ist eine in Umfangsrichtung 3 des verdrehbaren Zahnrades 4 wirksame Federanordnung 9 angeordnet, die über den Umfang rotationssymmetrisch verteilte Federelemente 10 aufweist, die sich jeweils an dem Hauptzahnrad 2 und dem verdrehbaren Zahnrad 4 abstützen, wobei die aus elastomeren Federkörpern bestehenden Federelemente 10 auf einem die Nabe 5 umschließenden Ring 11 vorgesehen sind und an Stützstegen 12, die in axialer Richtung an dem verdrehbaren Zahnrad 4 vorstehend an diesem angeordnet sind, angreifen.

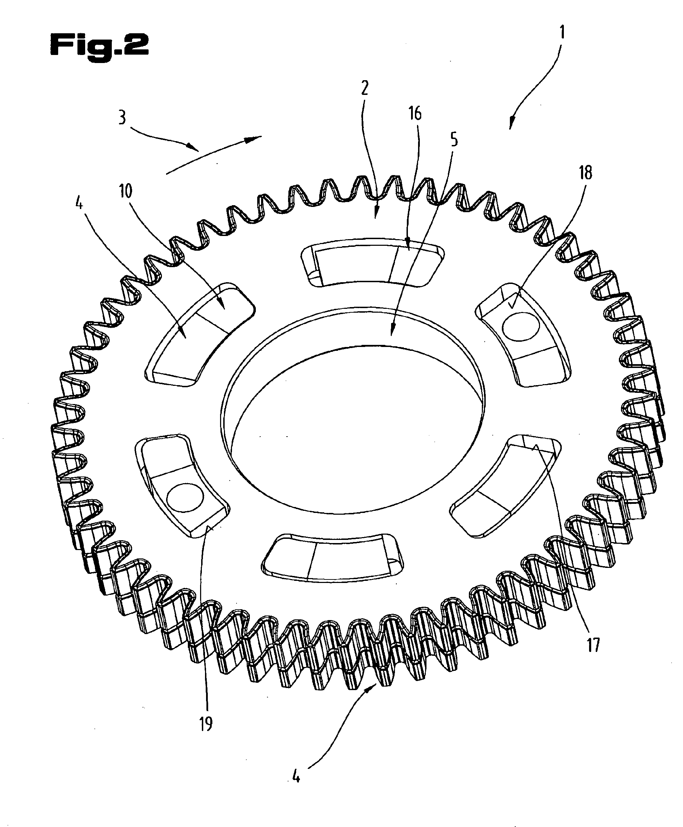

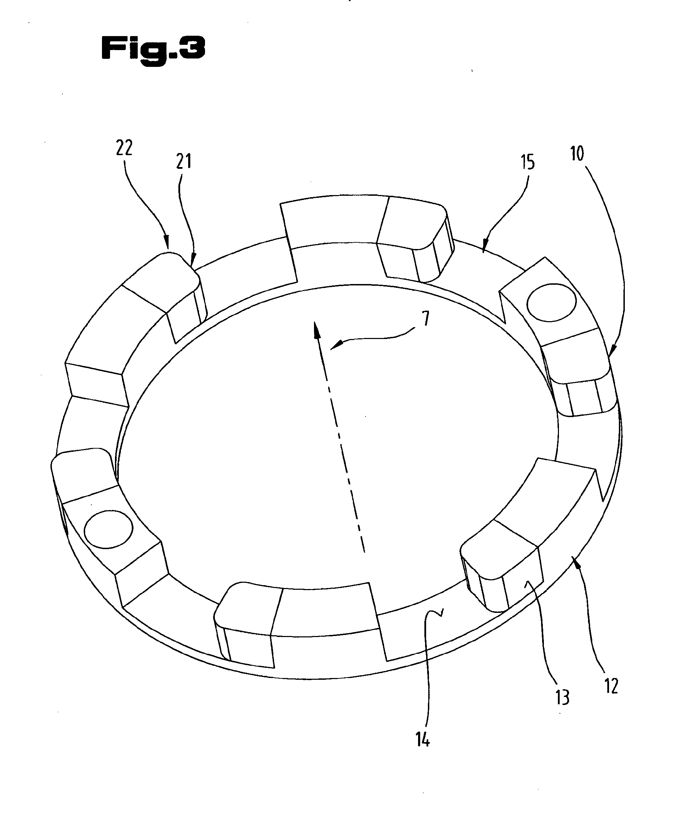

Die Fig. 2 und 3 zeigen eine erste Ausführungsvariante der Zahnradanordnung 1 nach der Erfindung. Zum Unterschied zu voranstehend beschriebenen Ausführungsform nach dem Stand der Technik, ist bei der erfindungsgemäßen Ausführung das Federelement 10 bzw. sind die Federelemente 10 nicht mehr als eigenes Bauteil sondern ein integraler Bestandteil des verdrehbaren Zahnrades 4. Mit anderen Worten bedeutet dies, dass das Federelement 10 mit dem verdrehbaren Zahnrad 4 zu einem Bauteil verbunden ist.

Aus Fig. 2 ist wiederum das Hauptzahnrad 2, das daran anliegende verdrehbare Zahnrad 4, das mit dem Federelement 10 gegen das Hauptzahnrad 2 in Umfangsrichtung 3 vorgespannt ist, ersichtlich. Das verdrehbare Zahnrad 4 ist dabei auf der Nabe 5 angeordnet, die nur mehr als kurzer Ringsteg - im Vergleich zur Ausführungsform nach Fig.1, ausgeführt ist, wodurch der Vorteil der verringerten Baugröße der erfindungsgemäßen Zahnradgruppe 1, die sich ursächlich aus der Anordnung der Federelemente 10 ergibt, u.a. begründet ist.

Fig. 3 zeigt die Anordnung der Federelemente 10 an den Stützstegen 12.

Obwohl es prinzipiell möglich ist, dass nur ein einziges Federelement 10 in der Zahnradanordnung 1 angebracht ist, weist die bevorzugte Ausführung der Erfindung mehrere Federelemente 10 auf, die, insbesondere symmetrisch, in der Umfangsrichtung 3 verteilt am verdrehbaren Zahnrad 4 angeordnet sind, wie dies aus der Darstellung der Erfindung in den Fig. 2 und 3 ersichtlich ist. Wenn daher im Folgenden mehrere Federelemente 10 beschrieben werden, sind diese Ausführungen auch auf Ausführungen der Zahnradanordnung mit nur einem Federelement 10 anzuwenden.

Die Federelemente 10 sind an einer in Umfangsrichtung 3 weisenden Seitenfläche 13 der Stützstege 12 angeordnet und mit dieser verbunden. Zusätzlich können die Federelement 10 zumindest teilweise auch mit einer in axialer Richtung 7 weisenden Oberfläche 14 eines Ringelementes 15 des verdrehbaren Zahnrades 4, an der und über die die Stützstege 12 vorragend angeordnet sind, verbunden sein, wobei dies nicht die bevorzugte Ausführung der Erfindung ist.

Zur Verbindung der Federelemente 10 mit den jeweiligen Stützstegen 12 werden die Federelemente 10 bevorzugt aufvulkanisiert. Dazu wird das un- bzw. vorvulkanisierte Rohmaterial für das jeweilige Federelement 10 in eine Form eingehüllt, in der sich bereits das verdrehbare Zahnrad 4 befindet, und die für die Ausbildung der Federelemente 10 entsprechende Kavitäten aufweist, wobei eine der Seitenflächen einer Kavität durch die Seitenfläche 13 des jeweiligen Stützsteges 12 und die Bodenfläche durch die Oberfläche 14 des Ringelementes 15 des verdrehbaren Zahnrades 4 gebildet ist, und in dieser bei einer, an das jeweils verwendete Rohmaterial angepassten erhöhten Temperatur vulkanisiert. Gegebenenfalls kann zur Erhöhung der Haftfestigkeit des Federelementes 10 an dem Stützsteg 12 dessen Seitenfläche 13 mit einem Primer vorbehandelt werden. Es ist aus dem selben Zweck auch eine Aufrauhung der Seitenfläche 13 möglich. Dies trifft auch auf die Oberfläche 14 des Ringelementes 15 des verdrehbaren Zahnrades 4 zu. Sollte hingegen eine Anhaftung des Federelementes 10 an dem Ringelement 15 nicht erwünscht sein, kann dessen Oberfläche 14 mit einem Trennmittel beschichtet werden oder ein Trennpapier aufgelegt werden.

Bevorzugt sind das verdrehbare Zahnrad 4 und das Hautzahnrad 2 über pulvermetallurgische Verfahren hergestellt und metallisch, sodass gegebenenfalls eine Oberflächenrauheit bzw. Oberflächenstrukturierung der Seitenfläche 13 bereits mit der Pressform, in der das Pulver zur Herstellung des verdrehbaren Zahnrades 4 verpresst wird, erzeugt werden kann. Die Oberflächenstrukturierung kann dabei auch in Form von Nuten oder Ausnehmungen, insbesondere mit Hinterschneidungen, ausgebildet sein, wodurch eine weitere Verbesserung der Haftung der Federelemente 10 an dem jeweiligen Stützsteg 12 erreicht werden kann.

Zur Herstellung der Verbindung zwischen dem jeweiligen Stützsteg 12 und dem jeweiligen Federelement 10 besteht auch die Möglichkeit, dass das Federelement 10 an die Seitenfläche 13 des Stützsteges 12 angespritzt wird. Nachdem in der bevorzugten Ausführung die Federelemente 10 zumindest teilweise, vorugsweise zur Gänze, aus zumindest einem Elastomer gebildet sind, erweist es sich dabei von Vorteil, wenn das Elastomer ein thermoplastisches Elastomer ist. Auch für diese Verfahrensweise kann einen entsprechende Form, wie voranstehend beschrieben, verwendet werden.

Als Elastomer kann beispielsweise ein Elastomer aus einer Gruppe umfassend Naturkautschuk, Styrol-Butadien-Kautschuk, Ethylen-Propylen-Dien-Kautschuk, Butadien-Kautschuk, Nitrilkautschuk, Chloropren-Kautschuk, chlorsulfoniertem Polyethylen und Polyurethan, Silikonen sowie Verschnitte oder Gemische daraus verwendet werden. Insbesondere diese Werkstoffe haben im Zuge der Erprobung der Zahnradanordnung die beste Wirkung gezeigt, selbst wenn die Federelemente 10 eine relativ kleine flächenmäßige Ausdehnung aufwiesen.

Im Fall der Verwendung eines thermoplastischen Elastomers wird dieses vorzugsweise aus einer Gruppe umfassend TPU, TPA und TPE ausgewählt.

Wie nachstehend noch ausgewührt wird, können die Federelemente 10 aber auch zumindest teilweise aus einem Thermoplast und/oder Duroplast bestehen, z.B. aus Polyethylen, Polypropylen, einem Ethylenvinylacetat-Copolymer, einem Polyamid, Polyvinylchlorid, Polyethylenterephthalat, einem Polyurethan.

Generell sind aber auch Mischungen aus den genannten Polymeren für die Federelemente 10 verwendbar.

Eine weitere Möglichkeit der Verbindung der Federelemente 10 mit dem verdrehbaren Zahnrad 4 besteht darin, dass diese aufklebt werden, wozu ein entprechender, handelsüblicher Kleber verwendet werden kann, gegebenenfalls in Kobmination mit einem Primer.

Weiters besteht die Möglichkeit eines reinen Formschlusses zwischen den Federelementen 10 und den Stützstegen 12 und/oder dem Ringelement 15 durch entsprechende Oberlflächenstrukturierung, wie dies beispielsweise voranstehend beschrieben wurde.

Auch Kombinationen zumindest zwei der genannten Verbindungsmöglichkeiten sind verwendbar. In der bevorzugten Ausführungsvariante der Erfindung werden die Federelemente 10 allerdings aufvulkanisiert.

Wie aus Fig. 2 ersichtlich ist, weist das Hauptzahnrad Ausnehmungen 16 auf, in die die Stützstege 12 in axialer Richtung hineinragen. Diese Ausnehmungen 16 weisen zumindest in Umfangsrichtung 3 eine größere Abmessungen auf, als die entsprechenden Abmessungen der Stützstege 12, sodass auch die Federelemente 10 in diesen Ausnehmungen 16 aufgenommen werden und jeweils an einer Seitenfläche 17 der Ausnehmungen 16 anliegen. Zwischen einer der Seitenfläche 13 der Stützstege 12 in Umfangsrichtung gegenüberliegenden weiteren Seitenfläche 18 der Stützstege 12 und einer dieser benachbart situierten weiteren Seitenfläche 19 der Ausnehmungen 16 kann (jeweils) ein Distanzelement angeordnet sein, mit dem das verdrehbare Zahnrad 4 gegen das Hauptzahnrad 2 in Umfangsrichtung vorgespannt wird.

Es besteht die Möglichkeit, dass die Federelemente 10 nicht mit den Stützstegen 12 des verdrehbaren Zahnrades 4 verbunden sind, sondern dass die Ferdelemente 10 mit den Seitenflächen 17 der Ausnehmungen 16 verbunden werden, wobei die voranstehenden Ausführungen betreffend die Verbindungsmethoden entsprechend auch bei dieser Ausführungsvariante zur Herstellung der Verbindung der Federelemente 10 mit den Seitenflächen 17 anwendbar sind.

Gemäß einer weiteren Ausführungsvariante besteht zur Einstellung einer gewünschten Elastizität die Möglichkeit, dass die Federelemente 10 aus mehreren Schichten, zumindest jedoch zwei, bestehen, wobei für die einzelnen Schichten auch unterschiedliche Werkstoffe verwendet werden können. Die Verbindung der Schichten kann wieder durch Aufvulkanisieren, Anspritzen, Aufkleben, Formschluss, etc., wie voranstehend ausgeführt, erfolgen. Es ist dabei auch möglich, dass für oder in einzelne(n) dieser Schichten metallische Werkstoffe verwendet werden. Für die restlichen Schichten können die voranstehend genannten Polymere verwendet werden. Des weiteren besteht die Möglichkeit, dass diese Schichten eine unterschiedliche Größe aufweisen, wobei die Schichtdicke und/oder die Querschnittfläche der Schichten in Umfangsrichtung 3, also der Schichtung bei Ausbildung der Federelemente 10 mit mehreren Schichten, variieren kann.

In der bevorzugten Ausführung der Erfindung bestehen die Federelemente 10 allerdings zur Gänze aus einem Elastomer und sind einschichtig aufgebaut.

Es besteht weiters die Möglichkeit, dass die Federelmente 10 oder zumindest einzelne Schichten der Federelemente 10 mit einem Festschierstoff, z. B. Grafit oder Molybdändisulfid, und/oder mit einer Gleitbeschichtung, z.B. aus PTFE, versehen sind.

Zur Erhöhung der mechnischen Stabilität der Federelement 10 besteht zudem die Möglichkeit, dass diese oder zumindest einzelne Schichten der Federelemente 10 faserverstärkt ausgeführt sind, z.B. mit Glasfasern oder mineralischen Fasern oder Kunststofffasern. Die Fasern können dazu bereits dem Rohmaterial für die Herstellung der polymeren Teile der Federelemente 10 zugemischt werden.

Wie insbesondere aus Fig. 3 ersichtlich ist, können zumindest einzelne Kanten 21 und/oder Ecken 22 der Federelemente 10 gerundet ausgeführt sein, wobei vorzugsweise dies nicht auf die Kanten 21 und Ecken 22 im Verbindungsbereich mit den Stützstegen 12 oder den Seitenflächen 17 der Ausnehmungen 16 zutrifft.

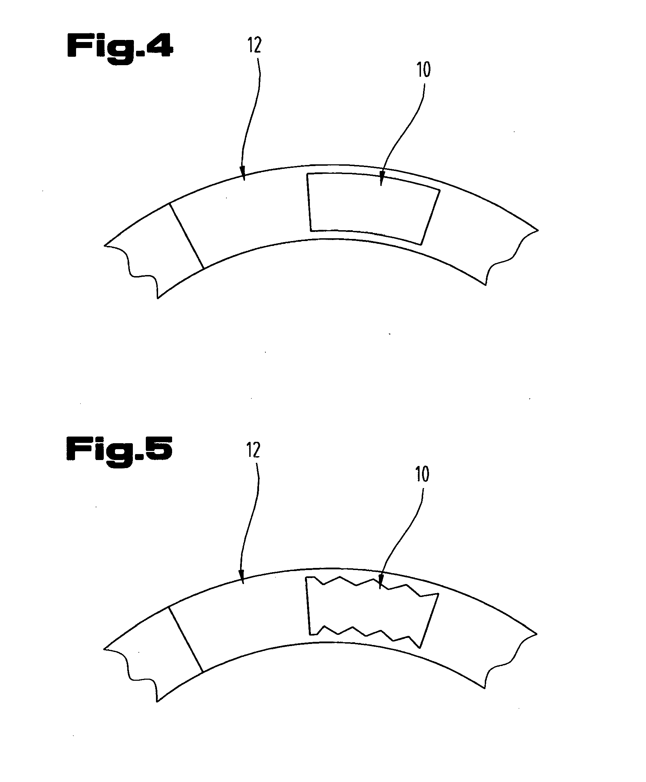

In den Fig. 4 und 5 sind Ausführungsvarianten der Federelemente 10 dargestellt, wobei diese wiederum mit den Stützstegen 12 verbunden sind, aber auch mit dem Hauptzahnrad 2 (Fig. 2) verbunden werden können, wie dies voranstehend beschrieben wurde. Insbesondere betreffen diese Ausführungsvarianten unterschiedliche Querschnittsformen der Federelemente 10. So ist in Fig. 4 dargestellt, dass die Ferderelmente 10 einen in Umfangsrichtung 3 konischen oder trapezförmigen Querschnitt und in Fig. 5 einen in Umfangsrichtung 3 zieharmonikaförmigen Querschnitt aufweisen können. Bei letzterer Ausführungsvariante können auch mit Vorteil mehrschichtige Federelemente 10 ausgebildet werden. Die Federelemente 10 können aber auch eine andere Querschnittsform aufweisen, beispielsweise eine konvexe.

Nach einer anderen Ausführungsvariante können die Federelemente 10 zumindest teilweise aus einem Ausnehmungen, insbesondere Poren, aufweisenden Polymer bestehen, insbesondere aus voranstehend genannten Thermoplasten oder Duroplasten, wobei über die Ausnehmungen bzw. die Poren eine gewisse Elastiziät bzw. Nachgiebigkeit der Federelement 10 hergestellt und über die Größe dieser Ausnehmungen bzw. Poren auch eingestellt werden kann.

Der Vollständigkeit halber soll abschließend noch darauf hingewiesen sein, dass das Hauptzahnrad 2 und/oder das verdrehbare Zahnrad 4 vorzugsweise aus einem Sinterstahl hergestellt sind.

Das Ringelement 15 kann als gesonderter Bauteil hergestellt sein und mit dem verdrehbaren Zahnrad 4 verbunden sein, ebenso besteht die Möglichkeit, dass dieses einstückig mit dem verdrehbaren Zahnrad 4 ausgebildet ist.

Die Ausführungsbeispiele zeigen mögliche Ausführungsvarianten der Zahnradanordnung 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus der Zahnradanordnung 1 diese bzw. deren Bestandteile teilweise unmaßstäblich und/oder vergrößert und/oder verkleinert dargestellt wurden.

Es können die einzelnen in den Fig. 2, 3; 4; 5 gezeigten Ausführungen den Gegenstand von eigenständigen, erfindungsgemäßen Lösungen bilden.

### Bezugszeichenaufstellung

- 1: Zahnradanordnung
- 2: Hauptzahnrad
- 3: Umfangsrichtung
- 4: Zahnrad
- 5: Nabe

- 6: Ausnehmung
- 7: Richtung
- 8: Sicherungselement
- 9: Federanordnung
- 10: Federelement

- 11: Ring
- 12: Stützsteg
- 13: Seitenfläche
- 14: Oberfläche
- 15: Ringelement

- 16: Ausnehmung
- 17: Seitenfläche
- 18: Seitenfläche
- 19: Seitenfläche
- 20:

- 21: Kante
- 22: Ecke

## Patentansprüche

1. Zahnradanordnung (1) mit einem Hauptzahnrad (2) und einem gegenüber diesem relativ in Umfangsrichtung (3) verdrehbaren Zahnrad (4), wobei das verdrehbare Zahnrad (4) zumindest einen in axialer Richtung (7) vorstehenden Stützsteg (12), der zwei Flächen, die sich in der Umfangsrichtung (3) erstrecken, und eine erste Seitenfläche (13) und eine zweite Seitenfläche, die sich in radialer Richtung erstrecken, aufweist, und das Hauptzahnrad (2) zumindest eine Ausnehmung (16) aufweist, in der der Stützsteg (12) zumindest teilweise aufgenommen ist, wobei die Ausnehmung (16) eine Abmessung in Umfangsrichtung (3) aufweist, die größer ist als die Abmessung des Stützsteges (12) in gleicher Richtung, sowie mit zumindest einem in Umfangsrichtung (3) des Hauptzahnrades (2) wirksamen Federelement (10), das an der ersten Seitenfläche (13) des Stützsteges (12) und zumindest teilweise innerhalb der Ausnehmung (16) angeordnet ist, **dadurch gekennzeichnet, dass** das Federelement (10) zumindest teilweise aus zumindest einem Elastomer besteht, mit der ersten Seitenfläche (13) des Stützsteges (12) verbunden ist und einen integralen Bestandteil des verdrehbaren Zahnrades (4) bildet, wobei die beiden Flächen und die zweite Seitenfläche des Stützsteges (12) kein Federelement aufweisen.

2. Zahnradanordnung (1) nach Anspruch 1, **dadurch gekennzeichnet, dass** das Elastomer ein thermoplastisches Elastomer ist.

3. Zahnradanordnung (1) nach Anspruch 1 oder 2, **dadurch gekennzeichnet, dass** das Federelement (10) auf den Stützsteg (12) aufvulkanisiert ist.

4. Zahnradanordnung (1) nach Anspruch 1 oder 2, **dadurch gekennzeichnet, dass** das Federelement (10) auf den Stützsteg (12) aufgeklebt ist.

5. Zahnradanordnung (1) nach einem der Ansprüche 1 bis 4, **dadurch gekennzeichnet, dass** das Federelement (10) zumindest teilweise mit gerundeten Kanten (21) und/oder Ecken (22) ausgebildet ist.

6. Zahnradanordnung (1) nach einem der Ansprüche 1 bis 5, **dadurch gekennzeichnet, dass** auf der Oberfläche des Federelementes (10) eine Gleitbeschichtung aufgebracht ist oder im Federelement (10) ein Festschmierstoff enthalten ist.

7. Zahnradanordnung (1) nach einem der Ansprüche 1 bis 6, **dadurch gekennzeichnet, dass** das Federelement (10) faserverstärkt ist.

8. Zahnradanordnung (1) nach einem der Ansprüche 1 bis 7, **dadurch gekennzeichnet, dass** das Federelement (10) einen in Umfangsrichtung (3) konischen oder trapezförmigen oder zieharmonikaförmigen oder konvexen Querschnitt aufweist.

## Claims

1. Gear arrangement (1) comprising a main gear (2) and a gear (4) that is rotatable relative thereto in circumferential direction (3), the rotatable gear (4) comprising at least one support web (12) projecting in axial direction (7), which has two lateral surfaces extending in circumferential direction (3) and a first end surface (13) and a second end surface extending in radial direction and the main gear (2) comprising at least one recess (16), in which the support web (12) is mounted at least partly, the recess (16) having a dimension in circumferential direction (3) that is greater than the dimension of the support web (12) in the same direction, and with at least one spring element (10) acting in the circumferential direction (3) of the main gear (2), which is arranged on the first end surface (13) of the support web (12) and at least partly inside the recess (16), **characterized in that** the spring element (10) is made at least partly from at least one elastomer, is connected to the first end surface (13) of the support web (12) and forms an integral component of the rotatable gear (4), the two lateral surfaces and the second end surface of the support web (12) not comprising a spring element.

2. Gear arrangement (1) as claimed in claim 1, **characterized in that** the elastomer is a thermoplastic elastomer.

3. Gear arrangement (1) as claimed in claim 1 or 2, **characterized in that** the spring element (10) is vulcanized onto the support web (12).

4. Gear arrangement (1) as claimed in claim 1 or 2, **characterized in that** the spring element (10) is adhered onto the support web (12).

5. Gear arrangement (1) as claimed in one of claims 1 to 4, **characterized in that** the spring element (10) is configured at least partly to have rounded edges (21) and/or corners (22).

6. Gear arrangement (1) as claimed in one of claims 1 to 5, **characterized in that** an antifrictional coating is applied to the surface of the spring element (10) or a solid lubricant is included in the spring element (10).

7. Gear arrangement (1) as claimed in one of claims 1 to 6, **characterized in that** the spring element (10) is reinforced by fibers.

8. Gear arrangement (1) as claimed in one of claims 1 to 7, **characterized in that** the spring element (10) has a cross section which is conical or trapezoidal or accordion-like or convex in circumferential direction (3).

## Revendications

1. Engrenage (1) comprenant une roue dentée principale (2) et une roue dentée (4) pouvant tourner dans la direction de la circonférence (3) par rapport à celle-ci, étant entendu que la roue dentée pouvant tourner (4) présente au moins une plaquette d'appui (12) faisant saillie dans la direction axiale (7) qui comporte deux surfaces qui s'étendent dans la direction de la circonférence (3), ainsi qu'une première surface latérale (13) et une deuxième surface latérale qui s'étendent dans la direction radiale, et que la roue dentée principale (2) présente au moins un évidement (16) dans lequel la plaquette d'appui (12) est reçue au moins partiellement, étant entendu que l'évidement (16) présente une dimension dans la direction de la circonférence (3) qui est plus grande que la dimension de la plaquette d'appui (12) dans la même direction, et comprenant également au moins un élément de ressort (10) agissant dans la direction de la circonférence (3) de la roue dentée principale (2) qui est agencé sur la première surface latérale (13) de la plaquette d'appui (12) et au moins en partie à l'intérieur de l'évidement (16), **caractérisé en ce que** l'élément de ressort (10) est constitué partiellement d'au moins un élastomère, est relié avec la première surface latérale (13) de la plaquette d'appui (12) et forme une partie intégrante de la roue dentée pouvant tourner (4), étant entendu que les deux surfaces et la deuxième surface latérale de la plaquette d'appui (12) ne présentent pas d'élément de ressort.

2. Engrenage (1) selon la revendication 1, **caractérisé en ce que** l'élastomère est un élastomère thermoplastique.

3. Engrenage (1) selon la revendication 1 ou 2, **caractérisé en ce que** l'élément de ressort (10) est vulcanisé sur la plaquette d'appui (12).

4. Engrenage (1) selon la revendication 1 ou 2, **caractérisé en ce que** l'élément de ressort (10) est collé sur la plaquette d'appui (12).

5. Engrenage (1) selon l'une des revendications 1 à 4, **caractérisé en ce que** l'élément de ressort (10) est réalisé au moins partiellement avec des bords (21) et/ou des angles (22) arrondis.

6. Engrenage (1) selon l'une des revendications 1 à 5, **caractérisé en ce qu'**un revêtement de glissement est appliqué sur la surface de l'élément de ressort (10) ou **en ce qu'**un lubrifiant solide est contenu dans l'élément de ressort (10).

7. Engrenage (1) selon l'une des revendications 1 à 6, **caractérisé en ce que** l'élément de ressort (10) est renforcé au moyen de fibres.

8. Engrenage (1) selon l'une des revendications 1 à 7, **caractérisé en ce que** l'élément de ressort (10) présente une section conique ou trapézoïdale ou en forme d'accordéon ou convexe dans la direction de la circonférence (3).
